# EUROPEAN PATENT SPECIFICATION

(11) **EP 2 182 759 B1**
(45) Date of publication and mention of the grant of the patent: **31.07.2013**
(21) Application number: 08291020.9
(22) Date of filing: 31.10.2008
(51) Int. Cl.: H04W 36/24, H04W 88/12, H04W 88/14, H04W 92/04

(54) **Method and equipment for improving radio network communications**
Verfahren und Geräte zur Verbesserung der Funknetzwerkkommunikationen
Procédé et équipement pour améliorer les communications dans un réseau radio

(43) Date of publication of application: 05.05.2010
(73) Proprietor: Alcatel Lucent, 75007 Paris (FR)
(72) Inventor: Betrencourt, Samuel, 92140 Clamart (FR); Treillard, Pascal, 91120 Palaiseau (FR)
(74) Representative: Therias, Philippe

(56) References cited:
- EP-A- 1 786 182
- WO-A-2008/051457
- GB-A- 2 364 620
- "policy-based routing, policy-based routing data forwarding" CISCO WHITE PAPER, XX, XX, 3 July 2000 (2000-07-03), pages 1-15, XP002241435

## Description

### BACKGROUND OF THE INVENTION

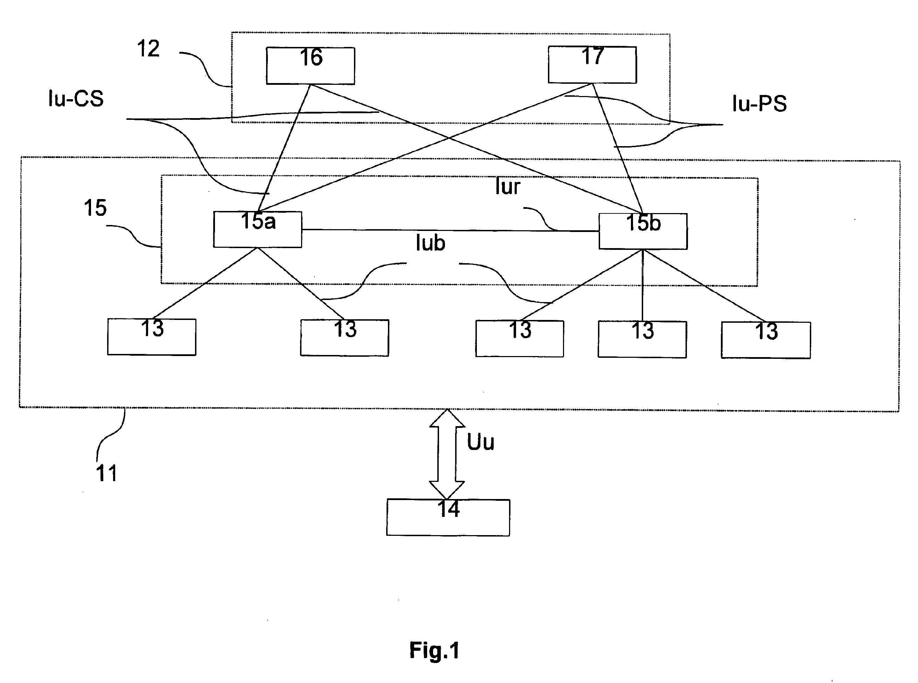

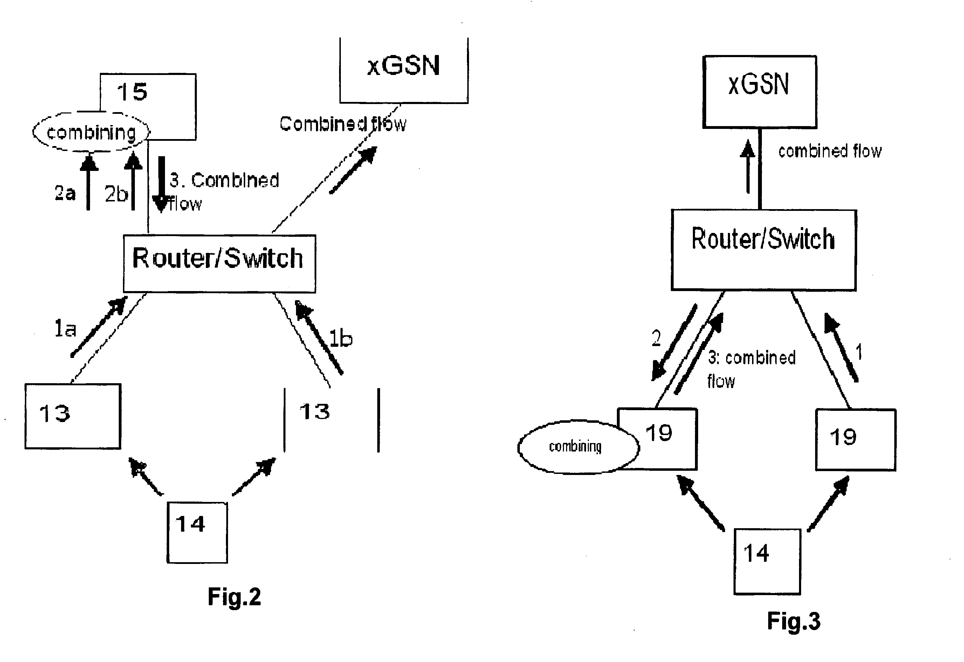

The present invention relates to the field of communication networks and more specifically of radio communication networks.
The present invention can be applied to radio communication networks of third generation notably of the universal mobile telecommunication system (UMTS) type. The general architecture of these networks is represented in Fig.1. Such networks can be divided into two parts, a radio access network (RAN) 11 and a core network (CN) 12. The RAN 11 comprises base stations 13, also called Node Bs, which comprise antennas in order to transmit and receive radio signals to and from the user equipments 14 through Uu interface and radio network controllers (RNC) 15 which manage the radio transmission of the base stations (Node Bs) 13 through Iub interfaces. The core network 12 comprises among other entities, Mobile Switching Center (MSC) 16 entities used for circuit-switched calls (CS), such as phone calls, videophone or fax and General packet radio service Support Node (GSN) 17 entities used for packet-switched (PS) calls such as Internet connections. The interface between the RNC 15 and the core network 12 is an Iu interface (Iu-circuit switched (Iu-CS) towards the MSC 16 and Iu-packet switch (Iu-PS) towards the SGSN 17) whereas the interface between two RNCs 15 is an Iur interface.
In such networks, a user equipment 14 can be connected to several Node Bs 13 at the same time. This feature is called macro-diversity and is described with regard to Fig.2. Uplink (UL) signals sent by the user equipment 14 are received by several (two in the present case) Node Bs 13. These signals are then transmitted to the RNC 15 through a router in order for both signals to be combined into a third signal having a better quality than each received signal taken alone (2a and 2b), said third signal being transmitted to the GSN 17 of the core network 12. Macro-diversity is achieved thanks to soft handover mechanisms that occur each time the UE 14 is connected to several Node Bs 13 at the same time, e.g. when the active set of the UE comprises several Node Bs. The active set corresponds to all the Node Bs for which the radio coverage area comprises the UE 14.

In the UMTS context, the RNC 15 in charge of the Iu interface for a given call at a given time is called the Serving RNC (SRNC). Indeed, a UE 14 can be connected to different Node Bs 13 managed by different RNCs 15. For example in Fig. 1, the UE 14 can be connected, at the same time, to a Node B 13 controlled by RNC 15a and to a Node B 13 controlled by RNC 15b. Thus, for a call, the SRNC may be connected to other RNCs 15 via Iur interface. The RNCs 15 to which the Serving RNC is connected via Iur for that call are called Drift RNCs (DRNC) and are used as relay to reach cells out of the SRNC control. Serving and Drift roles are dynamic and can be modified during the call using the SRNS relocation (Serving Radio Network Subsystem relocation). After this procedure is completed, Iu termination point within the UTRAN (UMTS Terrestrial RAN) is moved (from one RNC 15 to the other one). At any given point in time, there is a single SRNC (single Iu termination point). There may be zero, one or several DRNCs. Moreover, in this case, it is up to the SRNC to decide how the soft handover (SHO) is managed, e.g. that the SRNC is in charge of the recombination of UL signals, or that this task is delegated to the DRNC.

In order to improve the packet switch (PS) performances of such radio communication network, an idea, described in the 3GPP 25.999 technical report and in document WO 2008/051457 consists in bypassing the RNC equipment 15, thus creating a "flat architecture" that allows direct transmission from the base stations (Node Bs) 13 to the core network 12 and direct transmission between base station 13 and UE 14 allowing optimized management of radio channel impairments (radio block retransmission can be made more quickly between RAN 11 and UE 14). This flat architecture provides a reduced latency and therefore improves data throughput. In each self-interfered radio access network, Soft Handover (SHO) has to be available to improve the radio performances and to avoid call drops. In the UMTS context, introduction of enhanced-dedicated channels (E-DCH) strongly increases the uplink throughput but also contributes to high uplink interferences when UTRAN is not offering SHO.
In addition, advanced radio features, designed to improve the cell performance (interference cancellation) may require an accurate knowledge of each radio signal received at Node B level.
In the flat architecture, the RNC 15 functions are integrated inside the base stations (Node Bs) 13 which become the evolved High Speed Packet Access (e-HSPA) Node Bs 19. In particular, when inter HSPA nodeB Iur interface is available, SHO management function described above is transferred to e-HSPA Node B 19 as described in Fig.3. For each connected UE 4, one e-HSPA Node B 19 (the one where the Iu-PS interface is terminated for that UE) becomes the "serving e-HSPA Node B" and is in charge of controlling the SHO, relying on the inter e-Node B Iur interfaces.
Two deployment scenarios are considered in the 3GPP 25.999 technical report, respectively called stand-alone and shared carrier. Stand-alone consists in dedicating one carrier to high speed data traffic. Shared carrier allows sharing radio resources between high speed data traffic and legacy traffic, the latter one being handled by a legacy RNC in the role of Serving RNC, through a standard Iur interface, connecting it to the e-HSPA Node B, in the role of (DRNC+Node B). 3GPP 25.999 technical report states that "in carrier sharing case, non-HSPA traffic goes to RNC on Iur".
This solution (in either scenario) raises problems. Indeed, communications between the e-HSPA Node Bs 19 implies the use of costly transmission resources because direct transmission links have to be created on the "last mile" of the network. Existing study results highlight the cost (volume of data, network configuration...) of a quasi-meshed network represented in Fig.3, compared to a more classical star configuration represented in Fig.2. In addition, as one of the key benefits of the flat architecture is to reduce latency, inter e-HSPA Node B 19 user plane combining increasing the number of nodes involved in the PS transfer kills the expected benefit of RNC 15 bypass. Besides, such configuration increases the number of signaling messages to be handled per time unit in the core network (CN) 12. This may produce signaling load issues in the CN 12, because the control plane traffic triggered by SRNS relocation is highly increased when HSPA Node Bs 19 are added in the UTRAN (the SRNS relocation typically takes place each time the UE 14 moves from under an e-HSPA Node 19 coverage to the next, instead of each time the UE 14 moves from under an RNC 15 coverage to the next). In addition, in the flat architecture, SRNS relocation also takes place each time a CS call occurs.

### SUMMARY OF THE INVENTION

It is therefore an object of the present invention to overcome the precited drawbacks of the state of the art and provide a method for improving radio network efficiency wherein said radio network comprises a first architecture configuration wherein the base stations (Node Bs) communicate directly with the core network and a second architecture configuration wherein the communication between the base stations (Node Bs) and the core network is achieved through a radio network controller (RNC), the selection between said first and second architecture configuration being determined in function of user equipment mobility parameters, the type of service requested by the user equipment and the user equipment capabilities.

According to another embodiment, the radio network is based on high speed packet access (HSPA) services.

According to an additional embodiment, the determination of the user equipment mobility is achieved by a mobility analysis algorithm.

According to a supplementary embodiment, the determination of the signal path for the terrestrial part of the network is achieved using a mobility analysis algorithm.

According to a further embodiment, said first architecture configuration is selected if the user equipment is connected exclusively to one base station (Node B) and if no circuit switch (CS) call is requested.

According to an additional embodiment, said mobility analysis algorithm takes into account the user equipment radio channel coherence time.

According to another embodiment, said mobility analysis algorithm takes into account a user equipment mobility history data set.

According to a supplementary embodiment, said mobility analysis algorithm takes into account cell characteristics.

The present invention also refers to a base station (Node B) comprising an enhanced-high speed packet access (e-HSPA) configuration wherein it comprises means for determining the mobility of a user equipment and means for selecting between a first and a second architecture configuration to transmit data to the core network in function of said mobility.

According to another embodiment, said base station comprises means for receiving information about the mobility of a user equipment and means for selecting between a first and a second architecture configuration to transmit data to the core network in function of said mobility.

According to a supplementary embodiment, the first configuration comprises transmission from the base stations (e-HSPA Node Bs) to the core network through a radio network controller (RNC) whereas in the second configuration, transmission is achieved directly from the base stations (e-HSPA Node Bs) to the core network.

According to an additional embodiment, interfaces between the base stations (e-HSPA Node Bs) and the radio network controller (RNC) are Iur interfaces.

According to a further embodiment, interfaces between the base stations (e-HSPA Node Bs) and the mobile switching center (MSC) of the core network are lu-circuit switched (lu-CS) interfaces.

According to a supplementary embodiment, interfaces between the base stations (e-HSPA Node Bs) and the general packet radio service (GPRS) support node (GSN) of the core network are lu-packet switched (Iu-PS) interfaces.

The present invention also refers to a radio network controller comprising means for communicating with base stations (Node Bs) and means for communicating with the core network wherein it also comprises means for communicating with e-HSPA Node Bs.

### BRIEF DESCRIPTION OF THE DRAWINGS

FIG.**1** is a diagram of an embodiment of the general architecture of a radio communication network;
FIG.**2** is a diagram representing a soft handover mechanism in the case of a "legacy architecture";
FIG.**3** is a diagram representing a soft handover mechanism in the case of a "flat architecture";
FIG.**4** is a diagram representing the general architecture of a radio communication network according to the present invention;
FIG.**5** is a chart representing the active set of a user equipment at different times;
FIG.**6** is a diagram representing the displacement of a user equipment at different times;

### DETAILED DESCRIPTION OF THE INVENTION

As used herein, the term "GPRS" refers to the acronym general packet radio service.

As used herein, the term "user equipment" refers to terminals such as cell phones, PDAs or portable computers comprising equipment to communicate with base stations of the network.

As used herein, the terms "GSN" and "xGSN" refers to either Serving General packet radio service Support Node (SGSN) or Gateway General packet radio service Support Node (GGSN)

As used herein, the term "efficiency" of a radio network refers to both the performance (data throughput) and the capacity (number of channels) of the radio network.

As used herein, the term "legacy architecture" or "classical architecture" of a radio network refers to an architecture using radio network controllers (RNCs) to achieve base stations (Node Bs) management and communications with the core network.

As used herein, the term "flat architecture" of a radio network refers to an architecture where communications with the packet switch (PS) core network are achieved directly by the base stations (Node Bs), e.g. the RNC functions are achieved by the base stations (Node Bs).

As used herein, the terms "Node Bs, Uu, Iu, Iur and Iub interfaces" refer to the terms used in 3GPP technical specifications (3GPP TS 25.401 for example).

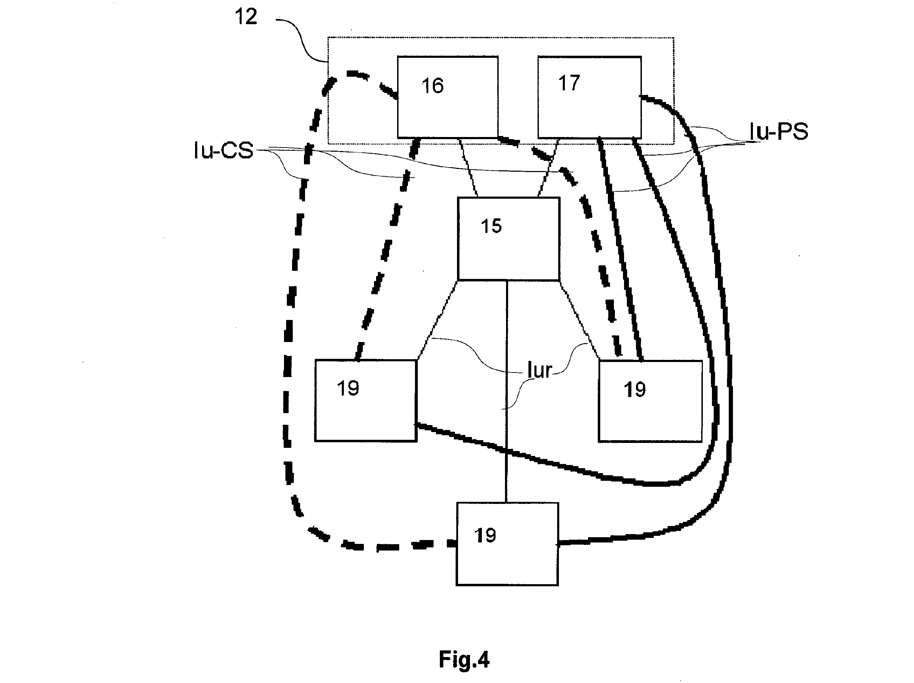

The radio network architecture offered by the present invention is described in fig.4. Compared to the classical configuration presented in fig.1, the differences are:
- the base stations are e-HSPA Node Bs 19;
- the interface between e-HSPA Node Bs 19 and the RNC 15 are Iur connections (instead of Iub);
- the interface between e-HSPA Node Bs 19 and the MSC 16 of the core network 12 are lu-CS connections;
- the interface between e-HSPA Node Bs 19 and the GSN 17 of the core network 12 are lu-PS connections;
   Thus, with such configuration, data transmission from the e-HSPA Node Bs 19 to the CN 12 can be achieved either directly or via a RNC 15.
   The idea of the present invention is to take advantage of two different configurations of the radio network architecture corresponding to these two possible modes of communication and data transmission.
   The purpose is threefold:
   1) benefit from the reduced latency of the flat architecture when radio connection is able to offer high bit rates.
   2) limit the cost of the last mile terrestrial resources, especially in the context of SHO.
   3) limit the signaling load between Core Network and UTRAN.

### 1) Benefit from the flat architecture when radio connection is able to offer high bit rates:

The goal of the flat architecture, as previously described, is to reduce latencies in the communications between the base stations 13, 19 and the core network 12 thanks to the suppression of intermediate nodes (RNC nodes 15 in the present case). Nevertheless, several conditions are needed to produce the expected improvement.
Firstly, a flat architecture is efficient only in the PS domain. Indeed, the CS calls cannot be handled by the eHSPA Node B 19 since there is no Iu-CS user plane interface to the eHSPA Node B 19 based on the 3GPP TR 25.999 technical report configuration. Thus, in any case, the CS calls have to be handled by the legacy RNC 15.
Moreover, the number of communications inter e-HSPA Node Bs 19 and between the e-HSPA Node Bs 19 and the core network 12 has to be reduced in order to prevent signaling load issues and to allow high throughput performances.
Besides, advanced radio features usage to increase the user throughput requires high Signal to Noise Ratio (SNR) and sufficient radio channel coherence time. As a consequence, maximum data rate are "reserved" to UEs 14 "static" and close to the station.

Thus, when the previous conditions are met, the reduction of the number of intermediate nodes (thanks to the suppression of RNCs 15) allows to reduce the Round Trip Time (RTT) and therefore to improve reactivity which is necessary to offer high data rates. Conversely, when the network optimal radio capacity requires macro-diversity, the probability for the UE 14 to be in a position to benefit from high data rates is quite reduced, thus Round Trip Time (RTT) is no longer a bottleneck.

It has also to be noted that some UEs 14, especially from the earlier generation of equipment, do not support all the advanced air interface features. They will therefore not benefit from the RTT reduction nor from the advanced high speed packet channels, but they may remove resources that could be used more efficiently by other users. This can be known by the SRNC at the beginning of the call thanks to a parameter named UE capabilities. As a consequence, in such case, the call will be handled by the legacy architecture.
Thus, the idea of the present invention is to use the flat configuration of the radio network architecture when neither data recombinations (SHO), nor CS calls are requested by high speed user terminals and the classical configuration otherwise.

### 2) limit the cost of the last mile terrestrial resources, especially in the context of SHO:

Flat IP architecture foresees the possibility of macro diversity between e-HSPA Node Bs 19, by the introduction of an inter-eHSPA Node B interface: the Iur interface. In uplink macro-diversity situations, this interface carries the user plane data flows to be recombined in one eHSPA Node B (the "serving eHSPA Node B), before being transferred to xGSN. This Iur interface imposes a quasi-meshing of the eHSPA Node B, in the sense that each eHSPA Node B must be connected to all its neighbours. As shown in figure 3, the UL flow sent by the Drift eHSPA Node B is first sent to a router that will forward the data down to the Serving eHSPA Node B. Therefore, seen from the serving eHSPA Node B, this becomes a downlink data flow, which competes with the direct downlink data flow sent from the xGSN (HSDPA traffic in particular). Thanks to the invention, the use of the legacy RNC in the case UL macro-diversity is required which avoids this drawback. The mechanism of figure 2 is then used. The UL flows do no longer compete with DL flows on the last mile, and instead, the recombining is performed higher up in the network hierarchy where the transmission cost is lower.

### 3) Limit the signaling load between Core Network and UTRAN:

In case of mobility, the UE 14 is prone to change cell quite often, in order to stay under the cell offering the best (or at least a good) data rate. A Node B 13, or eHSPA Node B 19 controls only a few cells, typically 3 around the antenna mast. Thus, a moving UE 14 may change serving Node B quite often. In the flat IP architecture, each change of serving eHSPA Node B imposes to perform an SRNS relocation, thus imposing a lot of signaling traffic and load. As on the other hand, because of radio reasons, UE 14 with high mobility are quite unlikely to benefit from high data rates, the invention will select this kind of UE and take them out of the flat IP architecture to put them back on the legacy architecture. In that architecture, an SRNS relocation with the CN only occurs when the Serving RNC changes. As an RNC coverage is much wider than that of a Node B 13 or eHSPA Node B 19, the signaling traffic between RAN 11 and CN 12 can be significantly reduced.

The best configuration for the user equipment 14 must be determined in all situations. This covers 2 main cases:
- call setup handling:

- mobility (on-going call handling)

### Call setup handling:

A PS call for UE 14 in idle mode will preferably be managed by e-HSPA Node B 19 and the flat achitecture. However, the system could take into account the UE 14 speed before deciding whether e-HSPA Node B 19 or classical Node B 13 will handle this call (e.g. during initial signaling phase with UE 14).
When a CS call for a UE 14 is setup (UE 14 idle or already involved in a PS call), an SRNS relocation to legacy RNC 15 is performed, as defined by the technical report.

### Mobility (on-going call handling):

As described previously, the optimal configuration depends, among other criteria, on the mobility of the UE 14. Thus, the present invention offers to use a mobility analysis algorithm in order to determine this UE 14 mobility. Said mobility can be determined, for example, by analyzing the evolution of the radio signals emitted by the UE 14 and received by the Node Bs 3, 19. These mobility information is then transmitted to the mobility analysis algorithm which determine the best configuration in case of a call request from said UE 14.
The key benefit of the invention is to reuse the existing UMTS architecture and the RNC functions to manage the SHO scenario. Existing RNCs usage reduces SHO implementation cost when HSPA Node Bs 19 are introduced. As soon as need for SHO is detected, the e-HSPA Node B 19, if handling the call at that time, will transfer its control to a legacy RNC 15. The e-HSPA Node B 19 then acts as a drift RNC. Note that it may result in a situation where the legacy RNC 15 supports the Serving RNC function, without actually having any radio link directly under its control.
In the reverse direction, as soon as a high speed UE 14 is considered to be in favourable conditions (typically stable enough in an area covered by an e-HSPA Node B 19, without need for macro-diversity and without CS call), the legacy RNC 15 will transfer its serving function to the e-HSPA Node B 19 thanks to a SRNS relocation procedure. For example, the configuration by default can be the classical configuration using RNCs 15 and if, after a predefined amount of time, the user equipment 14 has stayed in the same network cell and has not requested CS calls, the mobility analysis algorithm switches the configuration to a flat architecture for the corresponding user equipment 14.
The switch of configuration is achieved during an SRNS relocation procedure. Another parameter that can be taken into account by the mobility analysis algorithm is an estimation of the user equipment radio channel coherence time measured by the Node B 13, 19. The mobility analysis algorithm may also keep track of the mobility of the user in the past (since the beginning of the call as seen by the serving Node (eHSPA Node B 19 or RNC 15)), in terms of history of the cell changes kept in a mobility history data set. The mobility algorithm may also take into account the current cell characteristics, to decide whether the UE 14 is likely to move fast in the near future. For instance, a cell covering the inside of a shopping center area is quite unlikely to have users with high mobility pattern, whereas a cell covering a motorway or a train track area is likely to have most of its users following a high mobility pattern.
On the contrary, if the UE 14 is connected in a flat configuration and moves to another network cell, new radio links need to be added in the active set of the UE 14.
Therefore, a SRNS relocation is achieved and the configuration is switched to the classical one. This dual configuration allows providing the flexibility of the classical configuration when SRNS relocations or CS calls are requested while insuring high rates and low latency when the mobility of the user is reduced and no CS call is requested.

In order to better understand the features of the present invention, an example of functioning of an embodiment of said present invention in a given situation will now be described.

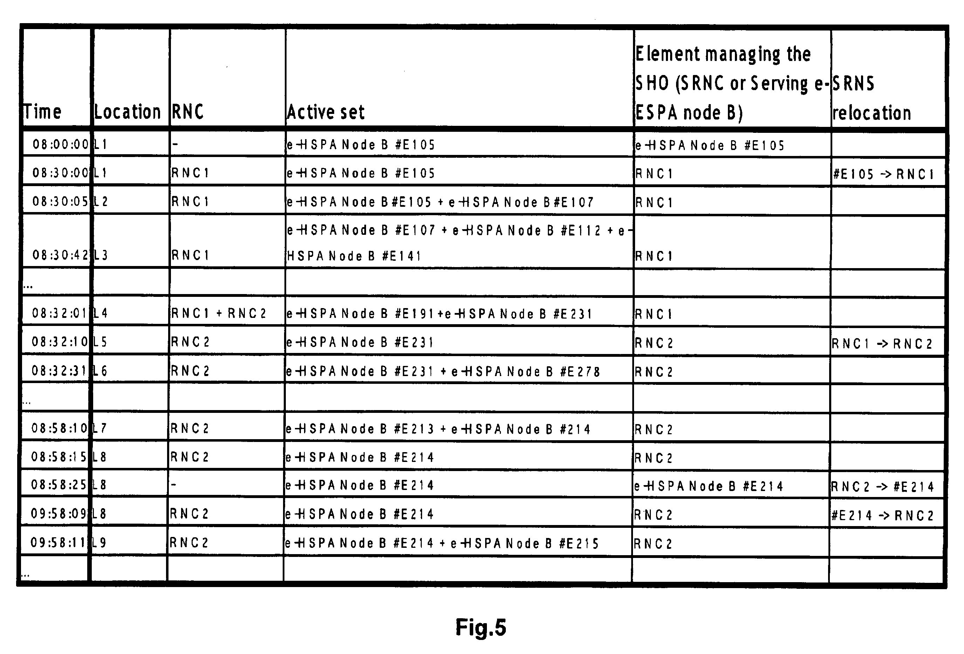

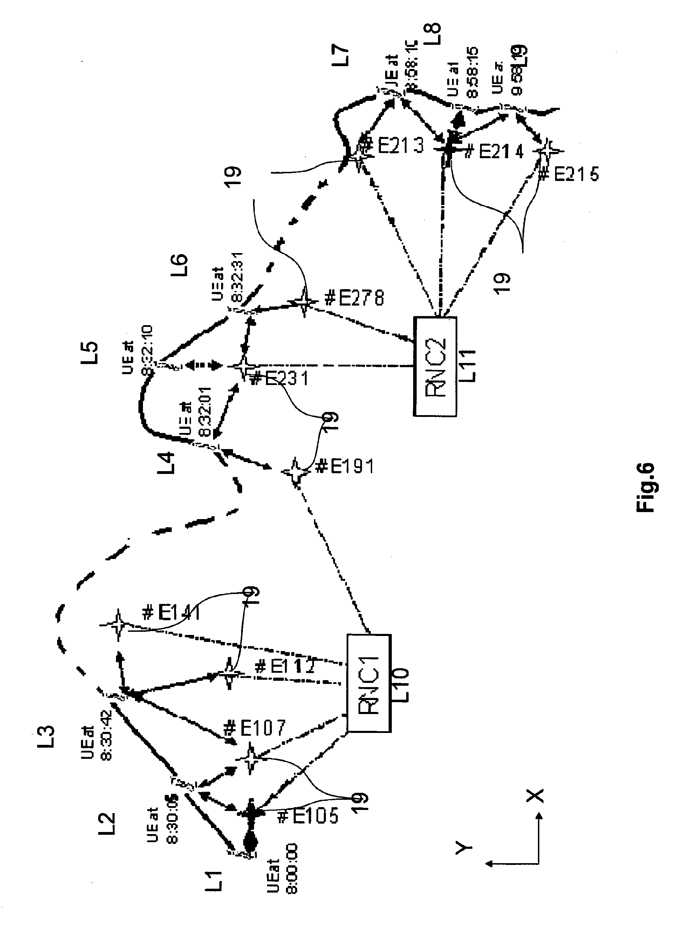

The following description will be based on Fig.5 representing the connections of a user equipment (UE) at different times and Fig.6 representing the displacement, in an XY representation, and the connections of said UE at said different times. On Fig.6, connections between the RAN and the CN have not been represented. Moreover, e-HSPA Node Bs 19 represented by a black star correspond to e-HSPA Node Bs used as serving e-HSPA Node Bs which corresponds to a flat architecture configuration whereas e-HSPA Node Bs represented by a white star correspond to e-HSPA Node Bs managed by RNC (legacy configuration). The bidirectional arrows between the UE and The e-HSPA Node Bs 19 represent the radio connections and the solid and dotted line connecting the different UE positions represents the UE displacement. The RNC 1 and 2 are respectively located in location L10 and L11.

A user turns on his mobile equipment from his office (location L1) at 8:00:00 and wants to download his emails and to consult internet websites. A scan is achieved to detect the reachable cells, which can be managed by either e-HSPA Node Bs or Node Bs. Assuming both are available and the UE is not moving, without need for macro-diversity, and as packet service is asked by the user, the e-HSPA Node B will be selected by the legacy RNC or the e-HSPA Node B itself (whoever has the control of the UE initially). In the present example, the only reachable Node B is the e-HSPA Node B #E105 and all the conditions are met to provide flat architecture so that the PS call is set up directly from the e-HSPA Node B #E105 to the CN.
At 8:30:00, said user leaves his office to visit a customer. He goes to his car and connects his UE to a company radio via internet, to listen to company information from his car, on the way to his client. When the user starts leaving his initial cell coverage, the displacement of his UE is detected by the mobility analysis algorithm and the control is transferred from the e-HSPA Node B #E105 to the legacy RNC 1 thanks to a SRNS relocation. Said legacy RNC 1 controls several Node Bs so that connection to new e-HSPA Node Bs controlled by RNC 1 such that e-HSPA Node B #E107 at 8:30:05 does not produce a SRNS relocation but only a SHO managed by RNC 1. Along the road, the user will go through different cells such as the cell covered by e-HSPA Node B #E112 and #E141 at 8:30:42 in location L3. Nevertheless, if theses cells are covered by e-HSPA Node Bs managed by RNC 1, only SHO mechanisms will be needed to insure the connection whereas with the configuration suggested by the 3GPP 25.999 technical report, SRNS relocation procedure would be needed each time the serving e-HSPA Node B would change which happens often during communication.
At 8:32:01 in location L4, the UE is connected to two e-HSPA Node Bs controlled by two different RNCs but the call is still managed by RNC 1 through e-HSPA Node B #E191 so that the introduction of e-HSPA Node B #E231 in the active set is achieved by a simple SHO.
At 8:32:10 in location L5, e-HSPA Node B #E191 is no longer in the active set. As a consequence, the call cannot be managed by the RNC 1 anymore and a SRNS relocation is needed to transfer the call management to the RNC 2. When the UE enters new cell coverage such as the cell coverage of e-HSPA Node B #E278 in location L6, the SHO procedure is then achieved by RNC 2. Again, as all the e-HSPA Node Bs of the cells met along the road (between locations L6 and L7) will be under the RNC 2 control, changes in the active set will be managed by SHO from the RNC 2, thus saving many SRNS relocation procedures compared to the configuration suggested by the 3GPP 25.999 technical report.
Then, at 8:58:10, the user arrives at the customer location L7, parks his car, stops the company radio, but stays connected to his company web site, as he will use material from there for his presentation. He still moves while on the way to the meeting room (L8), so stays handled by the RNC 2 (at 8:58:15). Once stable in the cell providing coverage to the meeting room (e.g. at 8:58:25), served by e-HSPA Node B #E214, RNC 2 transfers the control (through a SRNS relocation) to that e-HSPA Node B #E214. The user can then use material from his company site interactively, with the high reactivity offered by e-HSPA Node B #E214. After his 1 hour presentation (e.g. At 9:58:11), the user leaves the customer premises, and the control is transferred again to the legacy RNC (RNC 2).

Therefore, the present invention allows to the user to get high data rates through flat architecture when he is in favourable conditions (e.g. in a good and stable radio connection position) while avoiding issues due to a high number of SRNS relocations when he is moving.

It has also to be noted that the network may comprise several types of Node Bs simultaneously, for example classical Node Bs 3 working only with RNCs 5 and e-HSPA Node Bs able to provide flat architecture. In this case, if a classical node is present in the active set, the classical configuration is automatically selected.

Thus, the present invention takes benefit of the advantages of two different radio network architecture configurations while avoiding the corresponding drawbacks by switching from one configuration to the other in function of the user activity and the radio connection features. Said activity is monitored thanks to a mobility analysis algorithm which determine the best configuration in order to provide the best possible network performance, at any time, to the user.

## Claims

1. Method for improving radio network efficiency wherein said radio network comprises a first architecture configuration wherein the base stations, Node Bs, (13, 19) communicate directly with the core network (12) and a second architecture configuration wherein the communication between the base stations, Node Bs, (13, 19) and the core network (12) is achieved through a radio network controller, RNC, (15), **characterized in that** the selection between said first and second architecture configuration being determined in function of user equipment mobility parameters, the type of service requested by the user equipment and the user equipment capabilities.

2. Method for improving radio network efficiency in accordance with claim 1 wherein the radio network is based on high speed packet access, HSPA, services.

3. Method for improving radio network efficiency in accordance with claim 1 or 2 wherein the determination of the user equipment mobility is achieved by a mobility analysis algorithm.

4. Method for improving radio network efficiency in accordance with one of the previous claims wherein the determination of the signal path for the terrestrial part of the network is achieved using a mobility analysis algorithm.

5. Method for improving radio network efficiency in accordance with one of the previous claims wherein said first architecture configuration is selected if the user equipment (14) is connected exclusively to one base station, Node B, (13, 19) and if no circuit switch, CS, call is requested.

6. Method for improving radio network efficiency in accordance with claim 3, 4 or 5 wherein said mobility analysis algorithm takes into account the user equipment radio channel coherence time.

7. Method for improving radio network efficiency in accordance with one of the claims from 3 to 6 wherein said mobility analysis algorithm takes into account a user equipment mobility history data set.

8. Method for improving radio network efficiency in accordance with one of the claims 3 to 7 wherein said mobility analysis algorithm takes into account cell characteristics.

9. Base station, Node B, (19) comprising an enhanced-high speed packet access, e-HSPA, configuration wherein it comprises means for determining the mobility of a user equipment (14) and means for selecting between a first architecture configuration wherein the base station, Node B, (13, 19) communicate directly with the core network (12) and a second architecture configuration wherein the communication between the base station, Node B, (13, 19) and the core network (12) is achieved through a radio network controller, RNC, (15) in order to transmit data to the core network (12) in function of said mobility.

10. Base station, Node B, (19) in accordance with claim 9 wherein interfaces between the base stations, e-HSPA Node Bs, (19) and the radio network controller, RNC, (15) are Iur interfaces.

11. Base station, Node B, (19) in accordance with claim 9 or 10 wherein interfaces between the base stations, e-HSPA Node Bs, (19) and the mobile switching center, MSC, (16) of the core network are lu-circuit switched, lu-CS, interfaces.

12. Base station_{,} Node B, (19) in accordance with one of the claims from 9 to 11 wherein interfaces between the base stations, e-HSPA Node Bs, (19) and the general packet radio service, GPRS, support node, GSN, (17) of the core network (12) are lu-packet switched, lu-PS, interfaces.

## Patentansprüche

1. Verfahren zur Verbesserung der Funknetzwerkeffizienz, wobei das besagte Funknetzwerk eine erste Architekturkonfiguration, in welcher die Basisstationen, Knoten Bs, (13, 19) direkt mit dem Kernnetzwerk (12) kommunizieren, und eine zweite Architekturkonfiguration, in welcher die Kommunikation zwischen den Basisstationen, Knoten Bs, (13, 19) und dem Kernnetzwerk (12) über einen Funknetzwerk-Controller, RNC, (15), erfolgt, umfasst, **dadurch gekennzeichnet, dass** die Auswahl zwischen der besagten ersten und der besagten zweiten Architekturkonfiguration in Abhängigkeit von den Benutzergerät-Mobilitätsparametern, dem Typ des von dem Benutzergerät angeförderten Dienstes und den Benutzergerät-Fähigkeiten bestimmt wird.

2. Verfahren zur Verbesserung der Funknetzwerkeffizienz nach Anspruch 1, wobei das Funknetzwerk auf Hochgeschwindigkeits-Paketzugriffs- bzw. HSPA-Diensten basiert.

3. Verfahren zur Verbesserung der Funknetzwerkeffizienz nach Anspruch 1 oder 2, wobei die Bestimmung der Benutzergerät-Mobilität anhand eines Mobilitätsanalyse-Algorithmus erfolgt.

4. Verfahren zur Verbesserung der Funknetzwerkeffizienz nach einem der vorstehenden Ansprüche, wobei die Bestimmung des Signalpfades für den terrestrischen Teil des Netzwerks unter Verwendung eines Mobilitätsanalyse-Algorithmus erfolgt.

5. Verfahren zur Verbesserung der Funknetzwerkeffizienz nach einem der vorstehenden Ansprüche, wobei die erste Architekturkonfiguration ausgewählt wird, wenn das Benutzergerät (14) ausschließlich an eine Basisstation, Knoten B, (13, 19) angeschlossen ist, und wenn kein leitungsvermittelter bzw. CS-Ruf angefördert wird.

6. Verfahren zur Verbesserung der Funknetzwerkeffizienz nach Anspruch 3, 4 oder 5, wobei der besagte Mobilitätsanalyse-Algorithmus eine Benutzergerät-Funkkanal-Kohärenzzeit berücksichtigt.

7. Verfahren zur Verbesserung der Funknetzwerkeffizienz nach einem der Ansprüche 3 bis 6, wobei der besagte Mobilitätsanalyse-Algorithmus einen Benutzergerät-Mobilitätsverlaufs-Datensatz berücksichtig.

8. Verfahren zur Verbesserung der Funknetzwerkeffizienz nach einem der Ansprüche 3 bis 7, wobei der besagte Mobilitätsanalyse-Algorithmus Zelleigenschaften berücksichtigt.

9. Basisstation, Knoten B, (19) umfassend eine verbesserte Hochgeschwindigkeits-Paketzugriffs- bzw. e-HSPA-Konfiguration, wobei sie Mittel zur Ermittlung der Mobilität eines Benutzergeräts (14) und Mittel zur Auswahl zwischen einer ersten Architekturkonfiguration, in weiches die Basisstation, Knoten Bs, (13, 19) direkt mit dem Kernnetzwerk (12) kommuniziert, und einer zweiten Architekturkonfiguration, in welcher die Kommunikation zwischen der Basisstation, Knoten Bs, (13, 19) und dem Kernnetzwerk (12) über einen Funknetzwerk-Controller, RNC, (15), erfolgt, umfasst, um Daten in Abhängigkeit von der besagten Mobilität an das Netzwerk (12) zu übertragen.

10. Basisstation, Knoten B, (19) nach Anspruch 9, wobei Schnittstellen zwischen den Basisstationen, e-HSPA Knoten Bs, (19) und dem Funknetzwerk-Controller, RNC, (15) lur-Schnittstellen sind.

11. Basisstation, Knoten B, (19) nach Anspruch 9 oder 10, wobei Schnittstellen zwischen den Basisstationen, e-HSPA Knoten Bs, (19) und der mobilen Vermittlungsstelle, MSC, (16) des Kernnetzwerks leitungsvermittelte lu- bzw. CS-lu-Schnittstellen sind.

12. Basisstation, Knoten B, (19) nach einem der Ansprüche 9 bis 11, wobei Schnittstellen zwischen den Basisstationen, e-HSPA Knoten Bs, (19) und dem allgemeinen paketorientierten Funkdienst- bzw. GPRS-Unterstützungsknoten, GEN, (17) des Kernnetzwerks (12) paketvermittelte lu- bzw. PS-lu-Schnittstellen sind.

## Revendications

1. Procédé d'amélioration d'une efficacité d'un réseau radio dans lequel ledit réseau radio comprend une première configuration d'architecture dans laquelle les stations de base, Noeuds B, (13, 19) communiquent directement avec le coeur de réseau (12) et une deuxième configuration d'architecture dans laquelle la communication entre les stations de base, Noeuds B, (13, 19) et le coeur de réseau (12) est réalisée par l'intermédiaire d'un contrôleur de réseau radio, RNC, (15), **caractérisé en ce que** la sélection entre lesdites première et deuxième configurations d'architecture est déterminée en fonction des paramètres de mobilité d'un équipement utilisateur, du type de service demandé par l'équipement utilisateur et des capacités d'un équipement utilisateur.

2. Procédé d'amélioration d'une efficacité d'un réseau radio selon la revendication 1 dans lequel le réseau radio est basé sur des services d'accès par paquets haut débit, HSPA.

3. Procédé d'amélioration d'une efficacité d'un réseau radio selon la revendication 1 ou 2 dans lequel la détermination de la mobilité d'un équipement utilisateur est réalisée par un algorithme d'analyse de la mobilité.

4. Procédé d'amélioration d'une efficacité d'un réseau radio selon l'une des revendications précédentes dans lequel la détermination du trajet de signal pour la partie terrestre du réseau est réalisée en utilisant un algorithme d'analyse de la mobilité.

5. Procédé d'amélioration d'une efficacité d'un réseau radio selon l'une des revendications précédentes dans lequel ladite première configuration d'architecture est sélectionnée si l'équipement utilisateur (14) est connecté exclusivement à une station de base, Noeud B, (13, 19) et si aucun appel de commutateur de circuit, CS, n'est demandé.

6. Procédé d'amélioration d'une efficacité d'un réseau radio selon la revendication 3, 4 ou 5 dans lequel ledit algorithme d'analyse de la mobilité tient compte du temps de cohérence de voie radioélectrique d'un équipement utilisateur.

7. Procédé d'amélioration d'une efficacité d'un réseau radio selon l'une des revendications 3 à 6 dans lequel ledit algorithme d'analyse de la mobilité tient compte d'un ensemble de données d'historique de mobilité d'un équipement utilisateur.

8. Procédé d'amélioration d'une efficacité d'un réseau radio selon l'une des revendications 3 à 7 dans lequel ledit algorithme d'analyse de la mobilité tient compte des caractéristiques de cellule.

9. Station de base, Noeud B, (19) comprenant une configuration d'accès par paquets haut débit amélioré, e-HSPA, comprenant des moyens pour déterminer la mobilité d'un équipement utilisateur (14) et des moyens pour choisir entre une première configuration d'architecture dans laquelle la station de base, Noeud B, (13, 19) communique directement avec le coeur de réseau (12) et une deuxième configuration d'architecture dans laquelle la communication entre la station de base, Noeud B, (13, 19) et le coeur de réseau (12) est réalisée par l'intermédiaire d'un contrôleur de réseau radio, RNC, (15) afin de transmettre des données au coeur de réseau (12) en fonction de ladite mobilité.

10. Station de base, Noeud B, (19) selon la revendication 9 dans laquelle des interfaces entre les stations de base, Noeuds B e-HSPA, (19) et le contrôleur de réseau radio, SRNC, (15) sont des interfaces lur.

11. Station de base, Noeud B, (19) selon la revendication 9 ou 10 dans laquelle des interfaces entre les stations de base, Noeuds B e-HSPA, (19) et le centre de commutation mobile, CCM, (16) du coeur de réseau sont des interfaces à commutation de circuits lu, lu-CS.

12. Station de base, Noeud B, (19) selon l'une des revendications 9 à 11 dans laquelle des interfaces entre les stations de base, Noeuds B e-HSPA, (19) et le noeud de support de service général de radiocommunication par paquets, GPRS, GSN, (17) du coeur de réseau (12) sont des interfaces à commutation de paquets lu, lu-PS.
